# EUROPÄISCHE PATENTSCHRIFT

(11) **EP 2 323 522 B1**
(45) Veröffentlichungstag und Bekanntmachung des Hinweises auf die Patenterteilung: **31.10.2018**
(21) Anmeldenummer: 09782283.7
(22) Anmeldetag: 27.08.2009
(51) Int. Cl.: A47J 31/44

(54) **GETRÄNKEAUTOMAT**
BEVERAGE-DISPENSING APPLIANCE
APPAREIL DE DISTRIBUTION DE BOISSON

(30) Priorität: 17.09.2008 DE 102008042177
(43) Veröffentlichungstag der Anmeldung: 25.05.2011
(73) Patentinhaber: BSH Hausgeräte GmbH, 81739 München (DE)
(72) Erfinder: LUIPPOLD, Gregor, 82031 Grünwald (DE)
(86) Internationale Anmeldenummer: PCT/EP2009/061076
(87) Internationale Veröffentlichungsnummer: WO 2010/031672

(56) Entgegenhaltungen:
- EP-A1- 1 639 926
- EP-A1- 1 733 662
- EP-A1- 1 949 827
- WO-A1-01/72190
- WO-A1-2006/104575
- DE-A1- 3 903 003
- FR-A1- 2 883 089

## Beschreibung

Die vorliegende Erfindung betrifft einen Getränkeautomaten, insbesondere eine Kaffeemaschine, mit einem Getränkeauslauf und einem im Wesentlichen darunter angeordneten Aufnahmebereich gemäß dem Oberbegriff des Anspruchs 1.

Durch ein ansprechendes Design von Getränkeautomaten und insbesondere von modernen Kaffeemaschinen, sowie ein sich in letzter Zeit deutlich verbreitertes Angebotsspektrum von durch diese Getränkeautomaten zu erzeugenden Getränken, werden diese vermehrt gekauft und aufgestellt. Neben der eigentlichen Funktion steht dabei auch immer mehr das Design, das heißt ein ästhetischer Gesamteindruck, des Getränkeautomatens bzw. der Kaffeemaschine im Vordergrund der Kaufentscheidung. Aus diesem Grund wird es für Hersteller derartiger Getränkeautomaten bzw. Kaffeemaschinen zunehmend wichtiger, designerische Schwerpunkte zu setzen, mit welchen sich insbesondere bestimmte Linien, Serien oder auch eine Zugehörigkeit zu einer bestimmten Marke visuell darstellen lassen. Neben dem Design der Kaffeemaschinen steht auch eine einfache Bedienbarkeit Gebrauch und insbesondere eine einfache Reinigungsmöglichkeit zunehmend im Fokus des Verbrauchers.

Die EP 1 949 827 beschreibt beispielsweise eine Maschine zur Zubereitung eines Heißgetränks mit einem Wassertank, einer geschlossenen Brühkammer sowie einen Bereich zur Aufnahme einer Tasse. Die EP 1 733 662 beschreibt ein Einbauhaushaltsgerät, aufweisend eine Funktionseinheit, eine Frontblende und eine in einem Aufnahmehohlraum befestigbare Einschubvorrichtung, mittels der die Funktionseinheit aus dem Aufnahmehohlraum herausziehbar ist, wobei alle für die Bedienung des Einbauhaushaltsgerätes wesentlichen Ein- und Ausgabemittel Teil der Funktionseinheit sind. Ausgehend von diesem Stand der Technik beschäftigt sich die vorliegende Erfindung mit dem Problem, eine verbesserte Ausführungsform eines gattungsgemäßen Getränkeautomatens, insbesondere einer Kaffeemaschine, anzugeben, welche einerseits einen hohen designerischen Spielraum bietet und sich andererseits bei auftretenden Verunreinigungen besonders einfach reinigen lässt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen Getränkeautomaten, beispielsweise eine Kaffeemaschine, mit einem leicht auswechselbaren Aufnahmebereich auszurüsten. Hierdurch kann dieser zu Reinigungszwecken leicht entnommen werden und bietet andererseits die Möglichkeit, durch beispielsweise eine entsprechende Farbgestaltung, designerische Schwerpunkte zu setzen bzw. die Zugehörigkeit zu einer Marke oder zu einer Serie einer bestimmten Marke zu unterstreichen. Insbesondere ermöglicht die leichte Entnahme eine von dem Getränkeautomaten entkoppelte Reinigung, beispielsweise in einer Spülmaschine, wodurch ein hohe Kundenzusatznutzen bereitgestellt werden kann.

Erfindungsgemäß ist an der Aufnahmeeinrichtung zumindest eine Arretiereinrichtung, umfassend ein Clipselement, vorgesehen, über welches die Aufnahmeeinrichtung und damit der gesamte Aufnahmebereich am bzw. im Getränkeautomaten bzw. an der Kaffeemaschine, arretierbar ist. Eine derartige Arretiereinrichtung ist dabei mittels oben genannter Clipselemente als einfach zu bedienende und schnell zu lösende bzw. zu fixierende Arretiereinrichtung ausgebildet, , so dass ein Anbau des Aufnahmebereichs an den Getränkeautomaten sowie ein Abbau des Aufnahmebereichs vom Getränkeautomaten zu Reinigungszwecken mit wenigen Handgriffen und dadurch äußerst einfach möglich ist. Selbstverständlich ist dabei auch ein Zusammenwirken von einem oder mehreren Clipselementen mit weiteren Steckeinrichtungen oder Hinterschnitten denkbar. Durch den äußerst einfachen An- bzw. Abbauvorgang des Aufnahmebereichs am bzw. vom Getränkeautomaten, kann dieser zu Reinigungszwecken leicht entnommen werden und ermöglicht darüber hinaus eine große Variantenvielfalt, da unterschiedlichste Aufnahmebereiche, beispielsweise hinsichtlich ihrer Gestalt und Farbgebung, einfach an dem entsprechenden Getränkeautomaten bzw. an der entsprechenden Kaffeemaschine befestigt bzw. von diesem/dieser wieder gelöst werden können. Dabei ist insbesondere denkbar, dass der Getränkeautomat bzw. die Kaffeemaschine als Standardgerät vertrieben wird, während der Aufnahmebereich in unterschiedlichsten Farbgestaltungen sowohl im Zubehörhandel als auch frei wählbar zusammen mit dem Getränkeautomaten vertrieben werden kann. Insbesondere lässt sich durch eine dadurch erreichte Variantenvielfalt die Zugehörigkeit zu einer bestimmten Marke bzw. zu einer bestimmten Serie einer bestimmten Marke auf besonders einfache visuelle Weise darstellen. Von besonderem Vorteil dürfte darüber hinaus sein, dass mit unterschiedlichsten Farbvarianten der Aufnahmebereiche auf individuelle Kundenwünsche eingegangen werden kann, so dass neben der reinen Funktionalität der Kunde auch durch ein ihn individuell überzeugendes Design angesprochen werden kann.

Zweckmäßig weist der Aufnahmebereich eine Aufnahmeeinrichtung und eine dazu komplementär ausgebildete Abstützeinrichtung auf, wobei auf der Abstützeinrichtung das Getränkegefäß, respektive die Tasse, abstellbar ist und wobei die Abstützeinrichtung in der Aufnahmeeinrichtung höhenverstellbar ist. Die Aufnahmeeinrichtung ist dabei erfindungsgemäß im Wesentlichen aufrecht stehend und halbkokonartig ausgebildet, wobei die Abstützeinrichtung randseitig von der Aufnahmeeinrichtung umgriffen wird. Durch die Tatsache, dass die Abstützeinrichtung innerhalb der Aufnahmeeinrichtung in zumindest zwei unterschiedlichen Höhenstellungen arretierbar ist, können sowohl kleine Getränkegefäße, wie beispielsweise eine Espressotasse, als auch große Getränkegefäße, wie beispielsweise ein Latte Macchiato-Glas, höhengerecht unter einer Getränkeausgabe des Getränkeautomatens bzw. der Kaffeemaschine positioniert werden, ohne dass dabei befürchtet werden muss, dass durch einen zu großen Abstand zwischen dem Getränkegefäß und der Getränkeausgabe beim Befüllen des Getränkegefäß ein ungewolltes Spritzen und damit Verschmutzen des Aufnahmebereichs erfolgt. Der Aufnahmebereich ist somit leicht an unterschiedlich große Getränkegefäße anpassbar und unterliegt dadurch bereits einer deutlich reduzierten Verschmutzungsgefahr.

Bei einer vorteilhaften Weiterbildung der erfindungsgemäßen Lösung, weist die Abstützeinrichtung eine zumindest bereichsweise flüssigkeitsdurchlässige Stellfläche sowie eine darunter angeordnete Auffangvorrichtung auf. Die zumindest bereichsweise flüssigkeitsdurchlässige Stellfläche, welche beispielsweise in der Art eines Rosts ausgebildet ist, ermöglicht so einen Abfluss von einem fehlgeleiteten Getränkeanteil, beispielsweise beim Überlaufen des Getränkegefäßes während des Befüllvorgangs, wobei der übergelaufene Getränkeanteil zuverlässig und hygienisch in der darunter angeordneten Auffangvorrichtung aufgefangen werden kann. Durch eine Abnahme der Abstützeinrichtung mit der Auffangvorrichtung aus der Aufnahmeeinrichtung, kann die Auffangvorrichtung einfach entleert und wieder gereinigt werden.

Bei einer weiteren vorteilhaften Ausführungsform der erfindungsgemäßen Lösung, ist an der Stellfläche oder an der Auffangvorrichtung ein Haltekonsole angeordnet, die in der Art eines Schirmmützenschildes ausgebildet ist und zudem eine konische Form aufweist, so dass sich die Abstützeinrichtung beim Einstecken der Haltekonsole in die an der Aufnahmeeinrichtung vorgesehene Durchgangsöffnung selbst ausrichtet. Die besondere Form der Haltekonsole ermöglicht dadurch nicht nur ein selbst findendes und leichtes Einstecken der Abstützeinrichtung in die Aufnahmeeinrichtung und dadurch ein besonders leichtes Verstellen der Höhe der Abstützeinrichtung, sondern sie ermöglicht zudem beim Einführvorgang der Haltekonsole in die zugehörige Durchgangsöffnung ein selbständiges horizontales Ausrichten der Abstützeinrichtung und dadurch die Gewährleistung einer horizontalen Stellfläche, auf welcher das Getränkegefäß, respektive die Kaffeetasse, sicher steht. Die in der Art eines Schirmmützenschildes ausgebildete Haltekonsole kann dabei an die Abstützeinrichtung, beispielsweise an die Stellfläche oder an die Auffangvorrichtung, angespritzt sein und ist dadurch äußerst kostengünstig herstellbar. Vorzugsweise ist dabei die Haltekonsole an die Auffangvorrichtung angespritzt, wobei sowohl die Haltekonsole als auch die Auffangvorrichtung vorzugsweise als Kunststoffspritzgussteil ausgebildet sind. Die Stellfläche hingegen kann beispielsweise aus ästhetischen Gesichtspunkten aus Metall, selbstverständlich aber auch aus Kunststoff ausgebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine Ansicht auf eine Kaffeemaschine mit einem eingesetzten erfindungsgemäßen Aufnahmebereich,
- Fig. 2: die in Fig. 1 dargestellte Kaffeemaschine, jedoch mit separat dazu dargestelltem Aufnahmebereich,
- Fig. 3: eine Ansicht auf den Aufnahmebereich mit der Abstützeinrichtung und der Aufnahmeeinrichtung,
- Fig. 4: einen Einführvorgang der Abstützeinrichtung in die Aufnahmeeinrichtung.

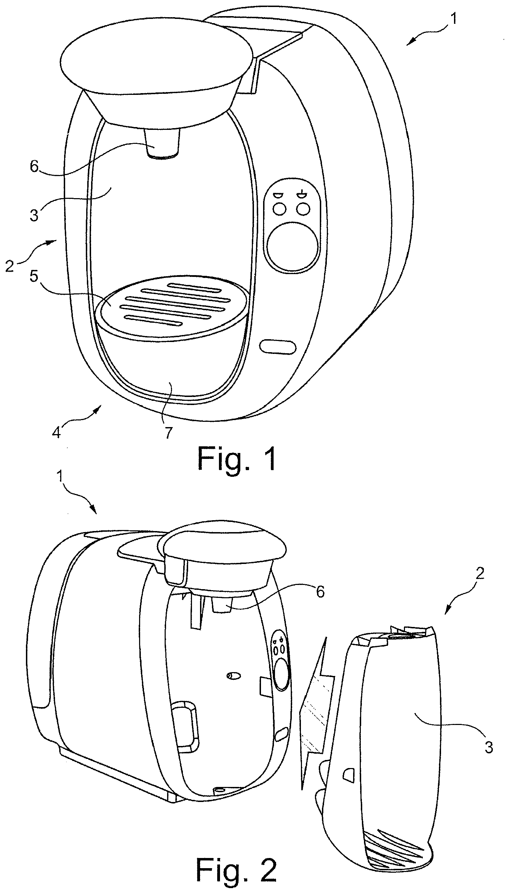

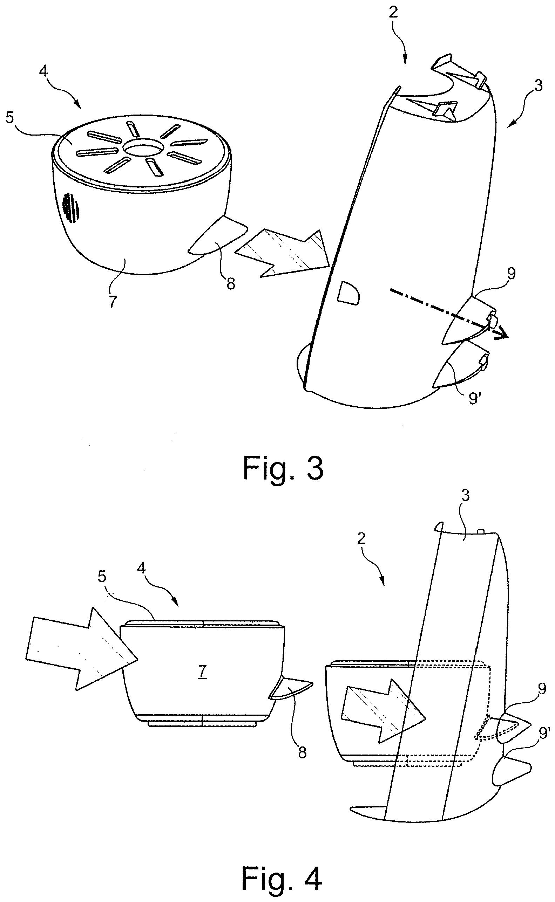

Entsprechend der Fig. 1, weist eine Kaffeemaschine 1, welche allgemein auch als Getränkeautomat ausgebildet sein kann, einen Aufnahmebereich 2 zum Aufnahmen/Halten eines nicht dargestellten Getränkegefäßes im Getränkeautomaten bzw. in der Kaffeemaschine 1 auf. Der Aufnahmebereich 2 ist zur besseren Veranschaulichung dabei gemäß der Fig. 3 in seine Komponenten zerlegt dargestellt, wobei der Aufnahmebereich 2 eine im Wesentlichen aufrecht stehende, halbkonkonartig ausgebildete Aufnahmeeinrichtung 3 sowie eine komplementär dazu ausgebildete Abstützeinrichtung 4 umfasst. Um ein verschmutzungsfreies Befüllen unterschiedlich großer Getränkegefäße, wie beispielsweise einer Espressotasse oder eines Latte Macchiato-Glases, gewährleisten zu können, ist die Abstützeinrichtung 4 in der Aufnahmeeinrichtung 3 in zumindest zwei unterschiedlichen Höhenstellungen arretierbar. Ein Abstellen des Getränkegefäßes erfolgt dabei üblicherweise auf einer Stellfläche 5 der Abstützeinrichtung 4. Soll demgemäß beispielsweise eine Espressotasse mit Espresso befüllt werden, so wird die Abstützeinrichtung 4 in einer höher gelegenen Position in der Aufnahmeeinrichtung 3 arretiert, als dies beispielsweise beim Befüllen eines Latte Macchiato-Glases der Fall ist. Mittels der höhenverstellbaren Abstützeinrichtung 4, können somit unterschiedlich große Getränkegefäße einfach befüllt werden, ohne dass dabei befürchtet werden muss, dass es durch einen zu großen Abstand zwischen einem Getränkeauslauf 6 und dem Getränkegefäß zu einem Verspritzen des Aufnahmebereichs 2 kommt.

Von entscheidender Bedeutung der erfindungsgemäßen Lösung ist, dass der Aufnahmebereich 2 als separates Teil ausgebildet ist, welches bei Bedarf, das heißt bei Benutzung des Getränkeautomatens 1, in bzw. an diesem befestigt wird. Dadurch ist es einerseits möglich, den Aufnahmebereich 2 zu Reinigungszwecken leicht zu entnehmen und beispielsweise in einer Spülmaschine zu reinigen, und andererseits unterschiedlichste Ausgestaltungen des Aufnahmebereichs 2 anzubieten, mit welchen beispielsweise unterschiedliche Linien bzw. Serien einer Marke oder aber auch die Zugehörigkeit zu einer Marke designerisch unterstrichen werden können. Selbstverständlich sind dabei in einem durch den Aufnahmebereich 2 freigegebenen Raum bei dessen Ausbau keine sicherheitsrelevanten Einrichtungen, wie beispielsweise elektrische Kabel, frei zugänglich.

Betrachtet man die Abstützeinrichtung 4, so fällt auf, dass diese aus der zumindest bereichsweise flüssigkeitsdurchlässigen Stellfläche 5 sowie einer darunter angeordneten Auffangvorrichtung 7 zusammengesetzt ist. Mittels der zumindest bereichsweise flüssigkeitsdurchlässigen Stellfläche 5 und der darunter positionierten Auffangvorrichtung 7 kann beispielsweise übergelaufene Flüssigkeit sicher und zuverlässig aufgefangen und bis zu einer Entsorgung aufbewahrt werden.

Zur Arretierung der Abstützeinrichtung 4 in der Aufnahmeeinrichtung 3, ist an der Auffangvorrichtung 7 eine Haltekonsole 8 angeordnet, welche alternativ in zumindest zwei voneinander beabstandete und an der Aufnahmeeinrichtung 3 vorgesehene Öffnungen 9 und 9' einsteckbar ist. Selbstverständlich können dabei die Öffnungen 9 und 9' auch als komplementär zur Haltekonsole 8 ausgebildete Taschen ausgebildet sein. Eine Innenkontur der wenigstens zwei Öffnungen 9 und 9' bzw. derartig ausgebildeter Taschen, sind dabei üblicherweise komplementär zu einer Außenkontur der Haltekonsole 8 ausgebildet, so dass diese vorzugsweise formschlüssig in die Öffnungen 9 und 9' bzw. die Taschen eingeführt werden kann. Erfindungsgemäß ist dabei die Haltekonsole 8 in der Art eines Schirmmützenschildes ausgebildet und weist eine konische Form auf, so dass sich die Abstützeinrichtung 4 beim Einstecken der Haltekonsole 8 in die zugehörige Durchgangsöffnung 9 bzw. in die zugehörige Tasche selbst, insbesondere in horizontaler Richtung, ausrichtet und nivelliert. Hierdurch kann eine stets waagerechte Stellfläche 5 gewährleistet werden, auf welcher das Getränkegefäß sicher abgestellt werden kann.

Zum Arretieren Aufnahmeeinrichtung 3 in der Kaffeemaschine 1 und damit zu einem Arretieren des Aufnahmebereichs 2 in der Kaffeemaschine 1, ist an der Aufnahmeeinrichtung 3 zumindest eine Arretiereinrichtung, umfassend ein Clipselement, vorgesehen, welches alleine oder zusammen mit weiteren nicht gezeigten Arretier- und Steckverbindungen, ein zuverlässiges Fixieren des Aufnahmebereichs 2 an der Kaffeemaschine 1 sowie ein leichtes Einsetzen bzw. Lösen desselben gewährleistet. Prinzipiell können dabei sowohl die Aufnahmeeinrichtung 3 als auch die Abstützeinrichtung 4 aus Metall oder aus Kunststoff ausgebildet sein, wobei die einzelnen Komponenten 3, 4, 5 und 7 des Aufnahmebereichs 2 spülmaschinenfest ausgebildet sind, so dass eine Reinigung des Aufnahmebereichs 2 nicht unbedingt händisch erfolgen muss, sondern auf einfache Weise in einer herkömmlichen Spülmaschine.

Durch die leichte Lösbarkeit des Aufnahmebereichs 2 von der Kaffeemaschine 1 bzw. dem zugehörigen Getränkeautomaten, ist nicht nur eine besonders einfache Reinigung derselben möglich, sondern zudem auch eine individuelle, insbesondere farbliche und designerische Ausgestaltung des Aufnahmebereichs 2, wodurch auch auf spezielle und individuelle Kundenwünsche flexibel reagiert werden kann. Darüber hinaus ist durch einen entsprechend designerisch gestalteten Aufnahmebereich 2 auch die Zugehörigkeit zu einer Marke bzw. zu einer bestimmten Serie dieser Marke optisch leicht darzustellen. Durch die höhenverstellbare Abstützeinrichtung 4 kann darüber hinaus eine unerwünschte frühzeitige Verschmutzung des Aufnahmebereichs 2, und zwar insbesondere einer Innenwandung der Aufnahmeeinrichtung 3 zuverlässig vermieden werden.

### Bezugszeichenliste

- 1: Getränkeautomat/Kaffeemaschine
- 2: Aufnahmebereich
- 3: Aufnahmeeinrichtung
- 4: Abstützeinrichtung
- 5: Stellfläche
- 6: Getränkeauslauf
- 7: Auffangvorrichtung
- 8: Haltekonsole
- 9: Öffnung/Tasche

## Patentansprüche

1. Getränkeautomat, insbesondere eine Kaffeemaschine (1), mit einem Getränkeauslauf (6) und einem im Wesentlichen darunter angeordneten Aufnahmebereich (2), der eine im Wesentlichen aufrecht stehende, halbkokonartig ausgebildete Aufnahmeeinrichtung (3) aufweist, und in welchem während eines Befüllvorganges ein Getränkegefäß aufnehmbar/abstellbar ist, wobei der Aufnahmebereich (2) zu Reinigungszwecken als separates Teil und demnach vom Getränkeautomaten abnehmbar ausgebildet ist, **dadurch gekennzeichnet, dass** an der Aufnahmeeinrichtung (3) zumindest eine einfach zu bedienende und schnell zu lösende beziehungsweise zu fixierende Arretiereinrichtung umfassend zumindest ein Clipselement vorgesehen ist, über welche die Aufnahmeeinrichtung (3) und damit der gesamte Aufnahmebereich (2) am bzw. im Getränkeautomaten bzw. an der Kaffeemaschine, arretierbar ist, so dass ein Anbau des Aufnahmebereichs an den Getränkeautomaten sowie ein Abbau des Aufnahmebereichs vom Getränkeautomaten mit wenigen Handgriffen möglich ist.

2. Getränkeautomat nach Anspruch 1,
**dadurch gekennzeichnet,**
**dass** eine komplementär zur Aufnahmeeinrichtung (3) ausgebildete Abstützeinrichtung (4) vorgesehen ist, auf welcher das Getränkegefäß abstellbar ist, wobei die Abstützeinrichtung (4) in der Aufnahmeeinrichtung (3) in zumindest zwei verschiedenen Höhenstellungen arretierbar ist.

3. Getränkeautomat nach Anspruch 2,
**dadurch gekennzeichnet,**
**dass** die Abstützeinrichtung (4) eine zumindest bereichsweise flüssigkeitsdurchlässige Stellfläche (5) und eine darunter angeordnete Auffangvorrichtung (7) aufweist.

4. Getränkeautomat nach Anspruch 3,
**dadurch gekennzeichnet,**
**dass** an der Stellfläche (5) oder an der Auffangvorrichtung (7) eine Haltekonsole (8) angeordnet ist, welche alternativ in zumindest zwei von einander beabstandete und an der Aufnahmeeinrichtung (3) vorgesehene Öffnungen (9,9') einsteckbar ist.

5. Getränkeautomat nach Anspruch 4,
**dadurch gekennzeichnet,**
**dass** eine Innenkontur der wenigstens zwei Öffnungen (9,9') in der Aufnahmeeinrichtung (3) komplementär zu einer Außenkontur der Haltekonsole (8) ausgebildet sind.

6. Getränkeautomat nach Anspruch 4 oder 5,
**dadurch gekennzeichnet,**
**dass** die Haltekonsole (8) in der Art eines Schirmmützenschildes ausgebildet ist und zudem eine konische Form aufweist, so dass sich die Abstützeinrichtung (4) beim Einstecken der Haltekonsole (8) in die zugehörige Durchgangsöffnung (9,9') selbst ausrichtet.

7. Getränkeautomat nach einem der Ansprüche 2 bis 6,
**dadurch gekennzeichnet,**
**dass** die Aufnahmeeinrichtung (3) und/oder die Abstützeinrichtung (4) aus Metall und/oder aus Kunststoff ausgebildet sind/ist.

8. Getränkeautomat nach einem der Ansprüche 2 bis 7,
**dadurch gekennzeichnet,**
**dass** die Auffangvorrichtung (7) eine Tassenform aufweist.

9. Getränkeautomat nach einem der Ansprüche 1 bis 8,
**dadurch gekennzeichnet,**
**dass** der Aufnahmebereich (2) spülmaschinenfest ausgebildet ist.

10. Abnehmbarer Aufnahmebereich (2) für einen Getränkeautomaten, insbesondere für eine Kaffeemaschine (1), der eine im Wesentlichen aufrecht stehende, halbkokonartig ausgebildete Aufnahmeeinrichtung (3) aufweist, und in welchem während eines Befüllvorganges ein Getränkegefäß aufnehmbar/abstellbar ist, wobei der Aufnahmebereich (2) zu Reinigungszwecken als separates Teil und demnach vom Getränkeautomaten abnehmbar ausgebildet ist, **dadurch gekennzeichnet, dass** an der Aufnahmeeinrichtung (3) zumindest eine einfach zu bedienende und schnell zu lösende beziehungsweise zu fixierende Arretiereinrichtung umfassend zumindest ein Clipselement vorgesehen ist, über welche die Aufnahmeeinrichtung (3) und damit der gesamte Aufnahmebereich (2) am bzw. im Getränkeautomaten bzw. an der Kaffeemaschine, arretierbar ist, so dass ein Anbau des Aufnahmebereichs an den Getränkeautomaten sowie ein Abbau des Aufnahmebereichs vom Getränkeautomaten mit wenigen Handgriffen möglich ist.

## Claims

1. Drinks machine, in particular a coffee machine (1), having a drinks outlet (6) and a housing region (2) which is arranged essentially thereunder which has an essentially upright housing arrangement (3) designed as a semi-cocoon, and in which a drinks vessel can be housed/placed during a filling process, wherein the housing region (2) is embodied as a separate part for cleaning purposes and accordingly is removable from the drinks machine, **characterised in that** at least one locking device which is simple to operate and can be quickly removed or fixed comprising at least one clip element is provided on the housing arrangement (3), by means of which locking device the housing arrangement (3) and thus the entire housing region (2) can be locked on or in the drinks machine or on the coffee machine, such that it is possible to attach the housing region to the drinks machine and to remove the housing region from the drinks machine in a few simple steps.

2. Drinks machine according to claim 1,
**characterised in that**
a support assembly (4) is provided which is embodied in a form that is complementary to the housing arrangement (3) and on which the drinks vessel can be placed, wherein the support assembly (4) can be locked in the housing arrangement (3) at at least two different height settings.

3. Drinks machine according to claim 2,
**characterised in that**
the support assembly (4) has a rest surface (5) which allows at least localised passage of liquids, and a collection device (7) that is arranged thereunder.

4. Drinks machine according to claim 3,
**characterised in that**
a retaining bracket (8) is arranged on the rest surface (5) or on the collection device (7) and can be inserted alternatively into at least two separate openings (9, 9') which are provided spaced apart from each other in the housing arrangement (3).

5. Drinks machine according to claim 4,
**characterised in that**
an internal contour of the at least two openings (9, 9') in the housing arrangement (3) is embodied in a complementary form to an external contour of the retaining bracket (8).

6. Drinks machine according to claim 4 or 5,
**characterised in that**
the retaining bracket (8) is embodied in the form of a peaked-cap projection and in addition has a conical shape, such that the support assembly (4) automatically aligns itself when the retaining bracket (8) is inserted into the associated opening (9, 9').

7. Drinks machine according to one of claims 2 to 6,
**characterised in that**
the housing arrangement (3) and/or the support assembly (4) are/is made of metal and/or plastic.

8. Drinks machine according to one of claims 2 to 7,
**characterised in that**
the collection device (7) has a cup shape.

9. Drinks machine according to one of claims 1 to 8,
**characterised in that**
the housing region (2) is dishwasher-safe.

10. Removable housing region (2) for a drinks machine, in particular a coffee machine (1), having an essentially upright housing arrangement (3) designed as a semi-cocoon, and in which a drinks vessel can be housed/placed during a filling process, wherein the housing region (2) is embodied as a separate part for cleaning purposes and accordingly is removable from the drinks machine, **characterised in that** at least one locking device which is simple to operate and can be quickly removed or fixed comprising at least one clip element is provided on the housing arrangement (3), by means of which locking device the housing arrangement (3) and thus the entire housing region (2) can be locked on or in the drinks machine or on the coffee machine, such that it is possible to attach the housing region to the drinks machine and to remove the housing region from the drinks machine in a few simple steps.

## Revendications

1. Appareil de distribution de boissons, en particulier machine à café (1), avec un écoulement de boisson (6) et une zone d'accueil (2) positionnée essentiellement sous celui-ci, laquelle présente un dispositif d'accueil (3) essentiellement disposé à la verticale, exécuté en forme de demi-cocon, et dans laquelle un récipient à boisson peut être reçu/posé durant un processus de remplissage, dans lequel la zone d'accueil (2) est exécutée sous la forme d'une pièce distincte et dès lors amovible de l'appareil de distribution de boissons à des fins de nettoyage, **caractérisé en ce qu'**au moins un dispositif d'arrêt facile à utiliser et à détachement respectivement à fixation rapide comprenant au moins un élément à clips est prévu sur le dispositif d'accueil (3), via lequel le dispositif d'accueil (3) et dès lors l'ensemble de la zone d'accueil (2) peut être bloqué sur resp. dans l'appareil de distribution de boissons resp. sur la machine à café, de sorte qu'un montage de la zone d'accueil sur l'appareil de distribution de boissons ainsi qu'un démontage de la zone d'accueil de l'appareil de distribution de boissons est possible en peu de gestes.

2. Appareil de distribution de boissons selon la revendication 1, **caractérisé en ce qu'**un dispositif de support (4) exécuté sous forme complémentaire au dispositif d'accueil (3) est prévu, sur lequel le récipient à boisson peut être posé, dans lequel le dispositif de support (4) peut être bloqué dans le dispositif d'accueil (3) selon au moins deux positions en hauteur différentes.

3. Appareil de distribution de boissons selon la revendication 2, **caractérisé en ce que** le dispositif de support (4) présente une surface de pose (5) perméable aux liquides au moins par endroits et un dispositif de collecte (7) disposé sous celle-ci.

4. Appareil de distribution de boissons selon la revendication 3, **caractérisé en ce qu'**une console de maintien (8) est disposée sur la surface de pose (5) ou sur le dispositif de collecte (7), laquelle peut s'insérer alternativement dans au moins deux orifices (9, 9') distants l'un de l'autre et prévus sur le dispositif d'accueil (3).

5. Appareil de distribution de boissons selon la revendication 4, **caractérisé en ce qu'**un contour intérieur des au moins deux orifices (9, 9') est exécuté dans le dispositif d'accueil (3) de façon complémentaire à un contour extérieur de la console de maintien (8).

6. Appareil de distribution de boissons selon la revendication 4 ou 5, **caractérisé en ce que** la console de maintien (8) est exécutée à la manière d'un bouclier à casquette et présente en outre une forme conique, de sorte que le dispositif de support (4) s'oriente par lui-même lors de l'insertion de la console de maintien (8) dans l'orifice de passage (9, 9') correspondant.

7. Appareil de distribution de boissons selon l'une des revendications 2 à 6, **caractérisé en ce que** le dispositif d'accueil (3) et/ou le dispositif de support (4) est/sont exécuté(s) en métal et/ou en plastique.

8. Appareil de distribution de boissons selon l'une des revendications 2 à 7, **caractérisé en ce que** le dispositif de collecte (7) présente une forme de tasse.

9. Appareil de distribution de boissons selon l'une des revendications 1 à 8, **caractérisé en ce que** la zone d'accueil (2) est exécutée sous une forme résistant au lave-vaisselle.

10. Zone d'accueil amovible (2) pour un appareil de distribution de boissons, en particulier pour une machine à café (1), laquelle présente un dispositif d'accueil (3) essentiellement disposé à la verticale, exécuté en forme de demi-cocon, et dans laquelle un récipient à boisson peut être reçu/posé durant un processus de remplissage, dans lequel la zone d'accueil (2) est exécutée sous la forme d'une pièce distincte et dès lors amovible de l'appareil de distribution de boissons à des fins de nettoyage, **caractérisé en ce qu'**au moins un dispositif d'arrêt facile à utiliser et à détachement respectivement à fixation rapide comprenant au moins un élément à clips est prévu sur le dispositif d'accueil (3), via lequel le dispositif d'accueil (3) et dès lors l'ensemble de la zone d'accueil (2) peut être bloqué sur resp. dans l'appareil de distribution de boissons resp. sur la machine à café, de sorte qu'un montage de la zone d'accueil sur l'appareil de distribution de boissons ainsi qu'un démontage de la zone d'accueil de l'appareil de distribution de boissons est possible en peu de gestes.
